# EUROPEAN PATENT SPECIFICATION

(11) **EP 2 032 299 B1**
(45) Date of publication and mention of the grant of the patent: **21.11.2012**
(21) Application number: 06762183.9
(22) Date of filing: 26.06.2006
(51) Int. Cl.: B23K 1/00

(54) **DEVICE FOR VACUUM TIGHT SOLDERING AN EVACUATED FLAT PANEL SOLAR COLLECTOR**
VORRICHTUNG ZUM VAKUUMDICHTEN LÖTEN EINES EVAKUIERTEN FLACHPLATTENSONNENKOLLEKTORS
DISPOSITIF PERMETTANT LE BRASAGE ÉTANCHE D'UN CAPTEUR SOLAIRE PLAN SOUS VIDE

(43) Date of publication of application: 11.03.2009
(73) Proprietor: SRB Energy Research SÀRL, 1205 Geneva (CH); European Organisation for Nuclear Research CERN, 1211 Geneva 23 (CH)
(72) Inventor: BENVENUTI, Cristoforo, F-1295 Tannay (FR)
(74) Representative: Kratter, Carlo
(86) International application number: PCT/EP2006/006140
(87) International publication number: WO 2008/000280

(56) References cited:
- WO-A-2005/075900
- DE-A- 3 127 153
- JP-A- 57 052 751
- JP-A- 57 092 663

## Description

The present invention relates to a device for vacuum tight soldering a perimeter metal coating of a transparent wall to a perimeter metal frame of a holding structure of an evacuated flat panel solar collector, according to the preamble of claim 1.

Such an evacuated flat panel solar collector is known in the art and is described in W02005/075900.

One of the main problems in the fabrication of the known evacuated flat panel solar collectors is soldering together in a vacuum tight way the perimeter metal coating of the transparent wall of the solar collector to the corresponding perimeter metal frame of the holding structure of said solar collector.

Up to now it is known to perform said soldering only manually. This way of soldering is rather time consuming as a skilled worker is able to produce only up to about 40 square meters of double glazed solar panel collectors a day.

An object of the invention is to provide a device which minimizes the duration of the soldering operation and which is at the same time able to perform said soldering rapidly and in an accurate/reproducible way, without the need of manual intervention, thus reducing the fabrication cost of these solar collectors and their reliability as far as vacuum tightness is concerned.

This and other objects which will be apparent to an expert in the field are attained by a device in accordance with the characterising portion of the accompanying claims.

The invention is better illustrated by the accompanying drawings, which are provided by way of non-limiting example and on which:
Figure 1 is a simplified perspective view of a device according to the invention,
Figure 2 is a simplified partial sectional view of figure 1 of a soldered solar collector,
Figures 3 and 4 are simplified partial sectional views of figure 1 with the soldering device in two different operative positions.

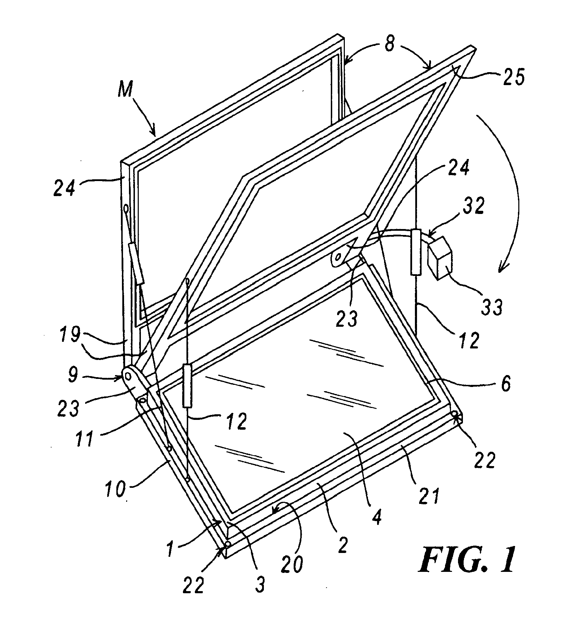

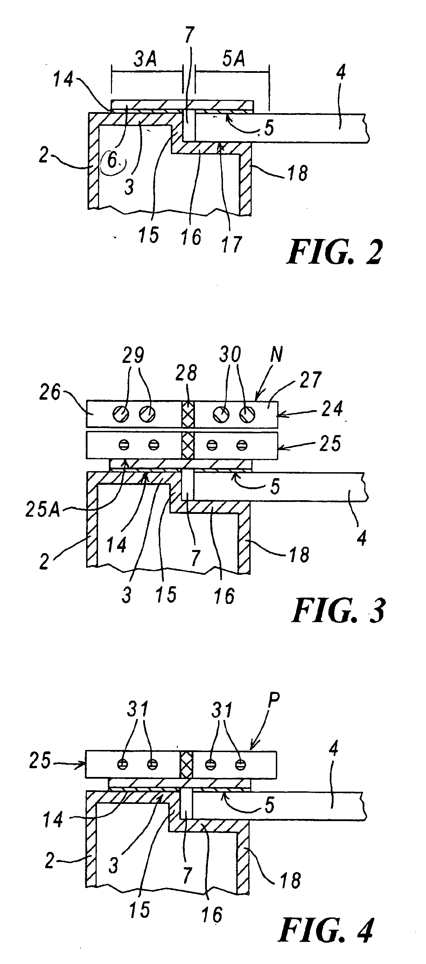

The figures 1 and 2 show an evacuated flat panel solar collector 1 comprising: a holding structure 2, made of metal, provided with a perimeter upper metal frame 3 for holding and supporting a transparent upper transparent wall 4, preferably a glass wall, provided all along its perimeter with a metal coating 5, and a joining ribbon, preferably a soft metal strip or ribbon 6, in particular a lead and/or copper strip or ribbon, for vacuum tight sealing the gap 7 between the first transparent wall 4 and the metal frame 2. This soft metal ribbon 6 is soldered, in particular soft soldered, to said perimeter metal frame 3 and said perimeter metal coating 5 of the transparent wall 4.

As shown in figure 2 preferably the upper metal frame 3 comprises: an upper flat surface 14 and a step 15 departing from an inner border of said surface 14. Said step 15 forming a seat 16 for the lower border 17 of the transparent wall 4, and a support bar 18 connecting this step 15 to a bottom part (not shown) of the holding structure. The step 15 is dimensioned in such a way that the upper perimeter metal coating 5 of the transparent wall remains substantially coplanar with the upper surface 14 of the metal frame 3 while the gap 7 between the transparent wall 4 and the metal frame 2 is a few millimetres wide.

An evacuated flat panel solar collector as described above is known in the art and is described for example in W02005/075900. Therefore this collector as well as its other components will not be further described in detail.

The soldering device according to the invention comprises a movable heating and pressing frame 8 hinged in 9 to a support structure 10, and means 11 and 12 for automatically moving this heating and pressing frame 8 from a first operative position M in which this frame 8 does not interfere with the collector 1, a second operative position N (figure 3) in which the complete frame 3 is positioned over the collector, and a third operative position P (figure 4) in which only a part of the frame 3 exerts pressure on the collector.

The support structure 10 comprises a support platform 21 featuring a hollow seat 20 having the same shape and dimensions as the lower part of the holding structure 2 of the collector 1 for firmly holding in a predetermined position the collector during the soldering operations. The support platform 21 also comprises means, for example holes 22 for bolts (not shown) for connecting it to a further support structure (not shown). The support structure at its rear side comprises upstanding flanges 23 for hinging the ends of two arms 19 departing from the heating and pressing frame 8. The heating and pressing frame 8 comprises two separate and overlapping frames having the same lateral dimensions: a first upper heating frame 24 and a second lower pressing frame 25. These two frames are hinged to the flanges 23 independently in such a way that: the pressing frame 25 may be rotated over the collector 1 before or at the same time as the heating frame 24 and, on the other hand, the heating frame 24 may be rotated away from the collector before the pressure 25 frame is moved in the same way or together with said pressing frame.

These two frames are shaped and dimensioned in such a way as to completely cover at least the soft metal ribbon 6 provided on the perimeter metal coated part 5 of the transparent wall 4 and on the perimeter metal frame part 3 of the holding structure 1, and preferably also a first part 5A (figure 2) of the transparent wall 4 comprising at least the perimeter metal coating 5, and a second part 3A of the holding structure 2 comprising at least part of the metal frame 3, and the soft metal ribbon 6.

Advantageously, the heating frame 24 is separated into two elements: an outer heating frame element 26 for heating only the metal frame part 3 of the holding structure 1 and the corresponding joining ribbon portion provided on that metal frame part, and an inner heating frame element 27 for heating only the metal coated part 5 of the transparent wall 4 and the corresponding joining ribbon portion provided on said metal coating. Advantageously, these two elements 26, 27 are separated by a thermal insulating element 28 such as for example a ceramic, glass fibre or organic polymer element, and are connected to different well-known heating means 29, 30, for example electrical heating means. These different heating means 29, 30 allow two different temperatures to be chosen for soldering of the soft metal ribbon 6 to the metal coating 5 of the glass wall 4 and to the metal frame 3, in view of the different thermal properties of these materials. This thermal insulation in the heating frame 24 guarantees a rapid and efficient soldering process while saving energy as the metal coating of the glass wall needs to be heated less than the metal frame of the holding structure.

The pressing frame 25 is also divided in two parts by the thermal insulating element 28, because such frame is realized in a thermal conductive material, preferably a metallic material, which is able to transfer the thermal energy from the heating frame 24 to the collector parts 14, 6, 5, 4 the lower surface 25A of the pressing frame 25 is in contact with. The pressing frame 25 may comprise inner cooling means 31, for example channels for the flow of a cooling fluid, fed to the device through a cooling tube 32 and cooling means 33.

The means 11, 12 for automatically moving between their operating positions M, N, P the heating and the pressing frames 24, 25 are for example a hydraulic o mechanical jack, but any known suitable moving means may be used. These moving means 11, 12 enable a rapid and efficient movement of the frames in their operative positions and guarantee that when only the pressing frame 25 is in its lower position P (figure 4) a sufficient pressure is exerted on the already melted soldering alloy layer so that a reliable soldering can take place.

The use of a device according to the invention is as follows. A glass wall 4 is positioned in the collector holding structure seat 16 so as to present its metal coated perimeter 5 coplanar with the flat edge 14 of the holding structure metal frame 3, which advantageously was previously tin or lead-tin alloy coated. The resulting gap 7 between the transparent wall 4 and the metal frame 2 is then covered by a joining ribbon, such as a soft metal strip or ribbon 6, also preferably tin coated, eventually interposing a thin layer of soldering alloy. The joining ribbon is then heated by lowering over said soft metal strip or ribbon 6 the heating and pressing frame 8 and by activating the heating means 29, 30 of the heating frame 24 which are kept at the required temperature until the tin and or the lead-tin covering the soft metal strip or ribbon 6 and the flat edge 14 of the holding structure metal frame 3 is melted eventually intermixing with the interposed soldering alloy layer. The typical duration of the melting process will be of the order of 30 seconds, with the temperature of the heating frame 24 ranging between 200 °C and 300 °C depending on the actual geometry and heat capacity of the glass wall 4 and metal frame 2. Then the heating frame 24 is lifted in its position M (figure 1) no longer interfering with the collector and only the pressing frame 25 is maintained over the collector. At the same time this pressing frame is slightly cooled below the soldering alloy melting point by activating the cooling means 31 provided in the pressing frame 25. In order to guarantee a vacuum tight soldering, said pressing frame 25 should exert over the joining ribbon a pressure sufficient to keep the surfaces of the soft metal strip or ribbon 6, the metal coated perimeter 5 of the glass wall 4 and the flat edge 14 of the holding structure metal frame 3 in good mechanical contact throughout the solidification process of the soldering alloy. The typical duration of the solidification process will be of the order of 30 seconds, with the force applied by the lower pressing frame 25 ranging between 10 Kg and 20 Kg per linear meter of the joining ribbon.

Finally, when the entire soldering process is completed, also the pressing frame 25 is lifted so as to allow the soldered collector 1 to be moved out and replaced by the next collector.

The device according to the invention allows the soldering operation to be carried out very quickly without the need of skilled workers, allowing the soldering of a few hundred square meters of evacuated panels a day with a single automatic assembly line.

While the invention has been illustrated and described in the drawings and in the above description, the same is to be considered as illustrative and not restrictive in character, it being understood that only a preferred embodiment has been shown and described and that all changes and modifications that come within the scope of the invention are desired to be protected. For example the solar collector could comprise a second transparent wall parallel to the wall 4 previously described and forming the bottom wall of the collector holding structure which according to this embodiment of the invention has a framed shape. The positioning and/or the shape of the joining ribbon as well as the shape and/or positioning of the metal coated layer of the glass wall as well as that of the metal frame part to be soldered may be different from that described above and may be any of the known variants, for example described in WO 2005/075900, in that case the heating and pressing frame would be modified accordingly in their shape in a way obvious to an expert in the field having the knowledge of the invention previously described.

## Claims

1. Device for vacuum tight soldering together a perimeter metal coating (5) of a transparent wall (4) with a perimeter metal frame (3) of a holding structure (2) of an evacuated solar collector (1), in particular a flat solar collector, said collector (1) comprising a joining ribbon (6), preferably a soft metal ribbon (6), in particular a lead and/or copper ribbon, which joining ribbon (6) is adapted to vacuum tight seal the gap (7) between said transparent wall (4) and said metal frame (3), and which joining ribbon (6) is adapted to be soldered, in particular soft soldered, with said perimeter metal frame (3) and with said perimeter metal coating (5) of the transparent wall (4), said joining ribbon (6) further comprising a soldering alloy, said device being **characterised by** comprising heating means (24) which are provided for heating a first part (5A) of said transparent wall (4) which comprises at least a portion of said perimeter metal coating (5), the heating means (24) being further provided for heating a second part (3A) of said holding structure (2) which comprises at least a portion of said perimeter metal frame (3), the heating means (24) being further provided for heating said joining ribbon (6) up to at least the melting temperature of said soldering alloy, when said transparent wall (4) is positioned in said holding structure (2) with said joining ribbon (6) overlapping at least partially said perimeter metal frame (3) and said metal coating, said device further comprising pressure means (25) for applying at least on said first and second part (5A, 3A) and for applying at least on said joining ribbon (6) a force which guarantees a mechanical contact of the melted soldering alloy with said metal frame (3) and said metal coating(5) throughout the solidification process of said soldering alloy.

2. Device according to claim 1 **characterised in that** said heating means (24) and pressure means (25) are separated from each other and that the device comprises means (11, 12) for automatically moving said heating and pressure means (24, 25) from a first operative position (M) in which said means do not interfere with the collector (1), to a second operative position (N) in which said heating and pressure means (24, 25) are positioned over the first part (5A) of the transparent wall (4), the second part (3A) of the holding structure (2) and the joining ribbon (6), and to a third operative position (P) in which only the pressure means (25) is positioned over said first and second part (3A, 5A) and the joining ribbon (6).

3. Device according to claim 1 **characterised in that** the heating means (24) comprise at least two thermally distinct heating members (26, 27): a first member (27) for heating the first part (5A) of the transparent wall (4), and a second member (26) for heating the second part (3A) of the holding structure (2).

4. Device according to claim 3 **characterised in that** the first and second heating members (26, 27) are incorporated in a unique body and are thermally separated from each other by a thermally insulating element (28).

5. Device according to claim 1 **characterised in that** the heating and pressure means comprise frame shaped members (24, 25).

6. Device according to claim 5 **characterised in that** the frame shaped heating and pressure members (24, 25) have substantially the same lateral dimensions and are separately hinged to a support structure (10) in such a way that in at least one operative condition (N) the frame shaped heating member (24) overlaps the frame shaped pressure member (25).

7. Device according to claim 1 **characterised in that** the pressure means (25) also comprise means for transferring the thermal energy generated by the heating means (24), to the first part (5A) of said transparent wall (4), to the second part (3A) of said holding structure (2) and to the joining ribbon (6).

8. Device according to claim 7 **characterised in that** the heat transfer and pressure means (25) are thermally separated into at least two thermally distinct heat transfer members: a first member for transferring heat to the first part (5A) of the transparent wall (4) and a second heat transfer member transferring heat to the second part (3A) of the holding structure (2).

9. Device according to claim 8 **characterised in that** the first and second heat transfer members are incorporated in a unique body and are thermally separated by each other by a thermally insulating element (28).

10. Device according to claim 1 **characterised in that** the pressure means (25) comprise means (31, 32, 33) for cooling the first part (5A) of said transparent wall (4), the second part (3A) of said holding structure (2) and the joining ribbon (6), once the heating means (29, 30) have heated said parts at least at the melting temperature of the interposed soldering alloy.

## Patentansprüche

1. Vorrichtung, um eine Umfangsmetallbeschichtung (5) einer transparenten Wand (4) mit einem Umfangsmetallrahmen (3) einer Haltestruktur (2) eines evakurierten Solarkollektors (1), insbesondere eines flachen Solarkollektors, vakuumdicht zusammenzulöten, wobei der Kollektor (1) ein Verbindungsband (6), vorzugsweise ein weiches Metallband (6), vorzugsweise ein Blei- und/oder Kupfer-Band umfasst, wobei das Verbindungsband (6) ausgestaltet ist, um den Zwischenraum (7) zwischen der transparenten Wand (4) und dem Metallrahmen (3) vakuumdicht abzudichten, und wobei das Verbindungsband (6) ausgestaltet ist, um mit dem Umfangsmetallrahmen (3) und mit der Umfangsmetallbeschichtung (5) der transparenten Wand (4) gelötet, insbesondere weich gelötet, zu werden, wobei das Verbindungsband (6) darüber hinaus eine Lötlegierung umfasst, wobei die Vorrichtung **dadurch gekennzeichnet ist, dass** sie Heizmittel (24) umfasst, welche vorhanden sind, um einen ersten Teil (5A) der transparenten Wand (4), welcher mindestens einen Abschnitt der Umfangsmetallbeschichtung (5) umfasst, zu heizen, wobei die Heizmittel (24) darüber hinaus vorhanden sind, um einen zweiten Teil (3A) der Haltestruktur (2) zu heizen, welcher zumindest einen Abschnitt des Umfangsmetallrahmens (3) umfasst, wobei die Heizmittel (24) darüber hinaus vorhanden sind, um das Verbindungsband (6) zumindest auf die Schmelztemperatur der Lötlegierung aufzuheizen, wenn die transparente Wand (4) in der Haltestruktur (2) angeordnet ist, wobei das Verbindungsband (6) den Umfangsmetallrahmen (3) und die Metallbeschichtung zumindest teilweise überlappt, wobei die Vorrichtung darüber hinaus Druckmittel (25) umfasst, um zumindest auf den ersten und zweiten Teil (5A, 3A) und um zumindest auf das Verbindungsband (6) eine Kraft aufzubringen, welche einen mechanischen Kontakt der geschmolzenen Lötlegierung mit dem Metallrahmen (3) und der Metallbeschichtung (5) über den Verfestigungsprozess der Lötlegierung hinweg garantiert.

2. Vorrichtung nach Anspruch 1, **dadurch gekennzeichnet, dass** die Heizmittel (24) und die Druckmittel (25) voneinander getrennt sind und dass die Vorrichtung Mittel (11, 12) umfasst, um die Heiz- und Druckmittel (24, 25) von einer ersten Betriebsposition (M), in welcher die Mittel den Kollektor (1) nicht beeinflussen, automatisch in eine zweite Betriebsposition (N), in welcher die Heiz- und Druckmittel (24, 25) über dem ersten Teil (5A) der transparenten Wand (4), dem zweiten Teil (3A) der Haltestruktur (2) und dem Verbindungsband (6) angeordnet sind, und einer dritten Betriebsposition (P), in welcher nur die Druckmittel (25) über dem ersten und dem zweiten Teil (3A, 5A) und dem Verbindungsband (6) angeordnet sind, zu bewegen.

3. Vorrichtung nach Anspruch 1, **dadurch gekennzeichnet, dass** die Heizmittel (24) zumindest zwei thermisch voneinander verschiedene Heizteile (26, 27) umfassen: ein erstes Teil (27), um den ersten Teil (5A) der transparenten Wand (4) zu heizen, und ein zweites Teil (26), um den zweiten Teil (3A) der Haltestruktur (2) zu heizen.

4. Vorrichtung nach Anspruch 3, **dadurch gekennzeichnet, dass** das erste und das zweite Heizteil (26, 27) in einem einzigen Körper aufgenommen sind und thermisch durch ein thermisch isolierendes Element (28) voneinander getrennt sind.

5. Vorrichtung nach Anspruch 1, **dadurch gekennzeichnet, dass** die Heiz- und Druckmittel rahmenförmige Teile (24, 25) umfassen.

6. Vorrichtung nach Anspruch 5, **dadurch gekennzeichnet, dass** die rahmenförmigen Heiz- und Druckmittel (24, 25) im Wesentlichen dieselben räumlichen Abmessungen aufweisen und getrennt drehbar an einer Haltestruktur (10) in einer solchen Weise angeordnet sind, dass bei zumindest einer Betriebsbedingung (N) das rahmenförmige Heizteil (24) das rahmenförmige Druckteil (25) überlappt.

7. Vorrichtung nach Anspruch 1, **dadurch gekennzeichnet, dass** die Druckmittel (25) auch Mittel umfassen, um die thermische Energie, welche durch die Heizmittel (24) erzeugt wird, auf den ersten Teil (5A) der transparenten Wand (4), den zweiten Teil (3A) der Haltestruktur (2) und auf das Verbindungsband (6) zu übertragen.

8. Vorrichtung nach Anspruch 7, **dadurch gekennzeichnet, dass** die Wärmeübertragungs- und Druckmittel (25) thermisch in zumindest zwei thermisch verschiedene Wärmeübertragungsteile unterteilt sind: ein erstes Teil, um Wärme auf den ersten Teil (5A) der transparenten Wand (4) zu übertragen, und ein zweites Wärmeübertragungsteil, welches Wärme auf den zweiten Teil (3A) der Haltestruktur (2) überträgt.

9. Vorrichtung nach Anspruch 8, **dadurch gekennzeichnet, dass** das erste und zweite Wärmeübertragungsteil in einem einzigen Körper aufgenommen sind und thermisch durch ein thermisch isolierendes Element (28) voneinander getrennt sind.

10. Vorrichtung nach Anspruch 1, **dadurch gekennzeichnet, dass** die Druckmittel (25) Mittel (31, 32, 33) umfassen, um den ersten Teil (5A) der transparenten Wand (4), den zweiten Teil (3A) der Haltestruktur (2) und das Verbindungsband (6) zu kühlen, wenn die Heizmittel (29, 30) die Teile einmal zumindest auf die Schmelztemperatur der dazwischen angeordneten Lötlegierung aufgeheizt haben.

## Revendications

1. Dispositif permettant le brasage étanche sous vide d'un revêtement métallique de périmètre (5) d'une paroi transparente (4) avec un cadre métallique de périmètre (3) d'une structure de maintien (2) d'un capteur solaire sous vide (1), en particulier un capteur solaire plat, ledit capteur (1) comprenant un ruban de jonction (6), de préférence un ruban métallique souple (6), en particulier un ruban de plomb et/ou de cuivre, lequel ruban de jonction (6) est apte à sceller sous vide l'espacement (7) entre ladite paroi transparente (4) et ledit cadre métallique (3), et lequel ruban de jonction (6) est apte à être brasé, en particulier par brasage tendre, avec ledit cadre métallique de périmètre (3) et avec ledit revêtement métallique de périmètre (5) de la paroi transparente (4), ledit ruban de jonction (6) comprenant en outre un alliage de brasage, ledit dispositif étant **caractérisé en ce qu'**il comprend un moyen de chauffage (24) prévu pour chauffer une première partie (5A) de ladite paroi transparente (4) qui comprend au moins une portion dudit revêtement métallique de périmètre (5), le moyen de chauffage (24) étant en outre prévu pour chauffer une deuxième partie (3A) de ladite structure de maintien (2) qui comprend au moins une portion dudit cadre métallique de périmètre (3), le moyen de chauffage (24) étant en outre prévu pour chauffer ledit ruban de jonction (6) jusqu'à au moins la température de fusion dudit alliage de brasage, lorsque ladite paroi transparente (4) est positionnée dans ladite structure de maintien (2) avec ledit ruban de jonction (6) chevauchant au moins partiellement ledit cadre métallique de périmètre (3) et ledit revêtement métallique, ledit dispositif comprenant en outre un moyen de pression (25) pour appliquer au moins sur lesdites première et deuxième parties (5A, 3A) et pour appliquer au moins sur ledit ruban de jonction (6) une force qui garantit un contact mécanique de l'alliage de brasage fondu avec ledit cadre métallique (3) et ledit revêtement métallique (5) au cours de tout le processus de solidification dudit alliage de brasage.

2. Dispositif selon la revendication 1, **caractérisé en ce que** ledit moyen de chauffage (24) et ledit moyen de pression (25) sont séparés l'un de l'autre et **en ce que** le dispositif comprend un moyen (11, 12) pour déplacer automatiquement lesdits moyens de chauffage et de pression (24, 25) d'une première position opérationnelle (M) dans laquelle lesdits moyens n'interfèrent pas avec le capteur (1) à une deuxième position opérationnelle (N) dans laquelle lesdits moyens de chauffage et de pression (24, 25) sont positionnés sur la première partie (5A) de la paroi transparente (4), la deuxième partie (3A) de la structure de maintien (2) et le ruban de jonction (6), et à une troisième position opérationnelle (P) dans laquelle seul le moyen de pression (25) est positionné sur lesdites première et deuxième parties (3A, 5A) et le ruban de jonction (6).

3. Dispositif selon la revendication 1, **caractérisé en ce que** le moyen de chauffage (24) comprend au moins deux organes de chauffage thermiquement distincts (26, 27) : un premier organe (27) pour chauffer la première partie (5A) de la paroi transparente (4) et un deuxième organe (26) pour chauffer la deuxième partie (3A) de la structure de maintien (2).

4. Dispositif selon la revendication 3, **caractérisé en ce que** les premier et deuxième organes de chauffage (26, 27) sont incorporés à un corps unique et sont thermiquement séparés l'un de l'autre par un élément d'isolation thermique (28).

5. Dispositif selon la revendication 1, **caractérisé en ce que** les moyens de chauffage et de pression comprennent des organes en forme de cadre (24, 25).

6. Dispositif selon la revendication 5, **caractérisé en ce que** les organes de chauffage et de pression en forme de cadre (24, 25) ont sensiblement les mêmes dimensions latérales et sont articulés séparément sur une structure de support (10) de manière à ce que, dans au moins une condition opérationnelle (N), l'organe de chauffage en forme de cadre (24) chevauche l'organe de pression en forme de cadre (25).

7. Dispositif selon la revendication 1, **caractérisé en ce que** le moyen de pression (25) comprend également un moyen pour transférer l'énergie thermique générée par le moyen de chauffage (24) à la première partie (5A) de ladite paroi transparente (4), à la deuxième partie (3A) de ladite structure de maintien (2) et au ruban de jonction (6).

8. Dispositif selon la revendication 7, **caractérisé en ce que** les moyens de transfert de chaleur et de pression (25) sont thermiquement séparés en au moins deux organes de transfert de chaleur thermiquement distincts : un premier organe pour transférer la chaleur à la première partie (5A) de la paroi transparente (4) et un deuxième organe de transfert de chaleur pour transférer la chaleur à la deuxième partie (3A) de la structure de maintien (2).

9. Dispositif selon la revendication 8, **caractérisé en ce que** les premier et deuxième organes de transfert de chaleur sont incorporés dans un corps unique et sont thermiquement séparés l'un de l'autre par un élément d'isolation thermique (28).

10. Dispositif selon la revendication 1, **caractérisé en ce que** le moyen de pression (25) comprend un moyen (31, 32, 33) pour refroidir la première partie (5A) de ladite paroi transparente (4), la deuxième partie (3A) de ladite structure de maintien (2) et le ruban de jonction (6), une fois que le moyen de chauffage (29, 30) a chauffé lesdites parties au moins à la température de fusion de l'alliage de brasage interposé.
